# EUROPEAN PATENT APPLICATION

(11) **EP 0 729 697 A1**
(43) Date of publication of application: **04.09.1996**
(21) Application number: 96870019.5
(22) Date of filing: 28.02.1996
(51) Int. Cl.: A01C 11/02

(54) **Machine for planting sprigs**

(30) Priority: 28.02.1995 BE 9500172
(71) Applicant: Van den Eynde, Willy, 2860 Sint-Katelijne-Waver (BE)
(72) Inventor: Van den Eynde, Willy, 2860 Sint-Katelijne-Waver (BE)
(74) Representative: Pieraerts, Jacques

(57) **Abstract**

The invention relates to a machine for planting sprigs characterised by gripping and pushing means under the form of wheels (10) with strips (11) or of transport strips which can be moved away from each other to apply the sprigs in sprig holes made for this purpose previously in the ground.

## Description

The present invention relates to a machine for planting sprigs such as i.a. leek, coal, various arboriculture sprigs also in the form of "superseedlings", which is provided for being mounted on a device for forming in the ground plant holes having the necessary interspacing.

The object of the invention is to provide a new and original machine enabling by means of technically reliable means to put sprigs at a correct depth in the sprig holes made by a device operating synchronously with this machine.

The machine is also designed to reach a very high sprig capacity in excellent conditions. Finally, the machine according to the invention is intended to put also young sprigs having a clod of earth attached to the root, the so-called "superseedlings", at the desired plant depth.

To realise these objects according to the invention, the machine mainly consists of a step-wise movable component provided with a number of vertical pipes, which component receives the sprigs and moves them to an outlet through which the sprigs fall, under which outlet two rotating means mutually co-operating in the same plane and operating as gripping and pushing means which are resiliently pulled towards one another and which are externally provided with flexible strips, between which the sprigs are gripped and moved downwards, one gripping and pushing means being driven continuously by means of a shaft onto which a pushing arm is attached to move in said plane, at each rotation of said means, the other means which is provided with a camshaft so that the contact between both means is interrupted and, along the other side an eccentric being mounted for driving a ratchet- and ratchet wheel mechanism ensuring the step-wise movement of said movable component.

According to an excellent operating embodiment, said movable component is a step-wise rotating disc which is provided with a number of adjustable vertical pipes provided for receiving the sprigs and which is rotated above a fixed plate showing an opening near said outlet.

An alternative of the invention consists in the fact that said movable component is a step-wise movable transporting chain which is provided with a number of adjustable pipes provided for receiving the sprigs and which is moved above a fixed elongated plate showing an opening near said outlet.

To realise the necessary synchronisation between said movable component and the mutually co-operating wheels, said pushing arm, mounted on the shaft of the continuously driven wheel, co-operates with a camshaft which is fixedly mounted on the shaft from the other wheel, in such a manner that at each rotation of the continuously driven wheel, the other wheel is pushed away from the first wheel.

According to a first possible embodiment, said flexible strips are inflatable strips.

According to an alternative hereof, said flexible strips are foam plastic or foam rubber strips.

Other details and advantages of the invention will appear from the following description of a machine for planting sprigs according to the invention. This description is only given by way of example and does not limit the invention. The reference numerals relate to the figures annexed hereto.

Figure 1 is a perspective view of two mutually co-operating wheels in the position wherein these wheels are mutually in contact.

Figure 2 is a similar view in the position wherein the same wheels are apart from each other.

Figure 3 is a schematic view of the machine seen along the side of the mechanism for the step-wise movement of the movable component.

Figure 4 is also a schematic but perspective view of the movable component with pipes mounted thereon.

Figure 5 is a schematic top view according to an alternative embodiment of the invention.

Figures 6 to 9 show schematically the operation cycle of the mutually co-operating gripping and pushing means represented here in the form of wheels.

To form a clear picture of the machine according to the invention, it has to be first conceived that immediately preceding to the operation of this machine, there is a device provided for applying sprig holes at regular distances in the ground. Such a device is known and does not pertain to the essence of this invention. An example of a usable device for applying sprig holes is described in Belgian patent No. 731.080 in the name of the applicant.

It is therefore also essential that the present described machine for planting in previously applied sprig holes has to co-operate precisely synchronously with this device.

It will therefore always be kept in mind that the machine according to the invention is mounted on a frame which pertains to the device of applying sprig holes. Also the machine, which will now be described, co-operates synchronously with the power drive of this device.

Some of the frame components onto which the essential components of the machine according to the invention are mounted, are shown only partially in certain figures. The plates 1 and 2 and a frame part 3 pertain to such frame components.

The sprigs to be placed correctly in the sprig holes and to be applied at the exact depth, are applied by one or more operators of the machine in pipes 4. The sprigs which can pertain to the category mentioned in the introduction, fall in these pipes 4 at the desired depth where they contact with their roots the upper side of a fixed plate 6. In these pipes 4, the sprigs therefor rest onto said plate until each of the sprigs are situated in the pipes above a filling opening 7 during the rotation of the movable component 5. The filling opening 7 is situated in the fixed plate 6 just above an outlet 8 which is fixedly welded on a plate 9 adjustable in length. The outlet 8, showing a slight conical profile, is then situated with its centre line between the gripping and pushing means consisting in the embodiment according to the annexed figures of wheels 10 with air strips 11.

The correct position of the outlet 8 is the one wherein a sprig can fall downwards between the strips 11 to end up finally more or less in the centre line of the annular conducting element 12.

The wheels 10 with their strips 11 are to be considered as being gripping and pushing elements. This term covers therefore also transporting belts which are externally provided with a flexible material and are put in contact with each other over a certain distance in such a manner that they also perform the function of gripping and pushing means. It can indeed be conceived that use could be made of two transport belts mutually co-operating and mutually contacting over a small distance as a replacement of wheels 10 with strips 11.

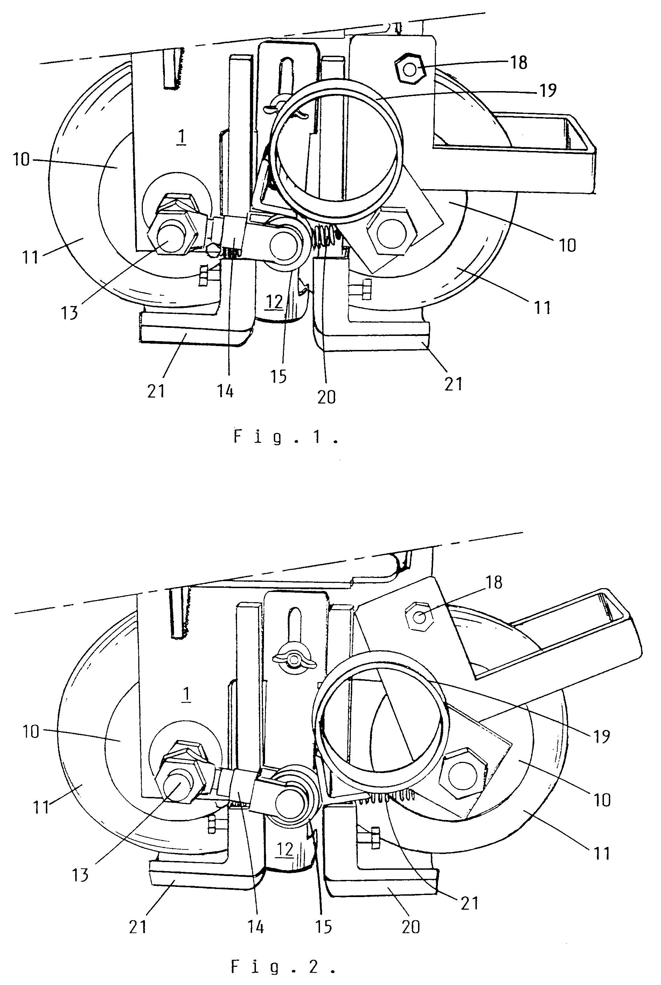

The strips 11 with which the wheels 10 are equipped, are only slightly inflated so that, when the wheels 10 are pulled towards each other (position according to figure 1, 6, 7 and 8), the sprigs to grip and to place in the sprig holes are gripped by these strips and further displaced without danger of damaging these sprigs. This enables to move between these "soft" strips, sprigs cultivated as "superseedlings", these are sprigs the roots of which are still enclosed by a clod of earth.

One of the wheels 10, i.e. the wheel which is mounted on the continuously driven shaft 13, rotates therefore continuously. On this shaft 13, a pushing arm 14 with a freely running wheel 15 is mounted.

The other wheel 10, i.e. the wheel that is mounted freely running on the shaft 16, can be moved sideways with respect to the continuously driven wheel 10. The wheel 10 with shaft 16 is indeed mounted on a tumbler plate 17 which can rotate around the shaft 18 onto which a camshaft 19 is connected to said tumbler plate 17.

Since both wheels 10 are pulled towards one another by a tension spring 20, the pushing arm 14 will contact the camshaft 19, at each rotation of the shaft 13 with this pushing arm 14, and move laterally the wheel 10 which is mounted in a freely running manner on the shaft 13.

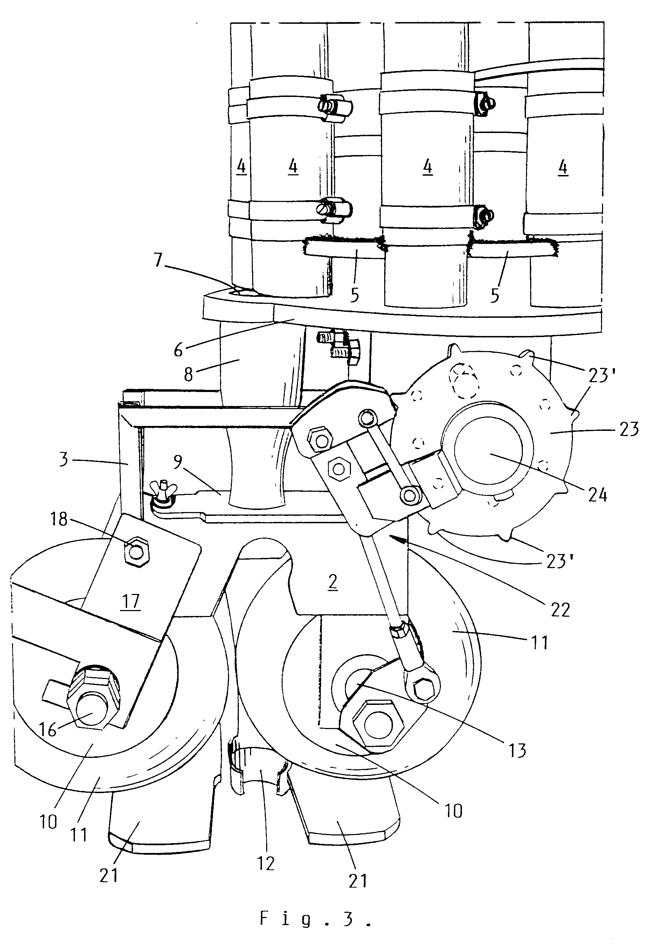

The position wherein the wheel 10 is moved with its camshaft 19 laterally, is illustrated by the figures 1, 3 and 9.

Finally, it will be referred to the wheel protection shield 21 which are adjustable in height. It is therefore also clear that the plane wherein both wheels are active and moved away from each other, respectively towards each other, extends at right angles with respect to the direction of movement of the machine.

To ensure the step-wise movement of the movable component 5 with the pipes 4 connected therewith, use has been made of a ratchet- and a ratchet wheel mechanism indicated with the general reference 22. The ratchet wheel is a ratchet 23 provided with teeth 23'.

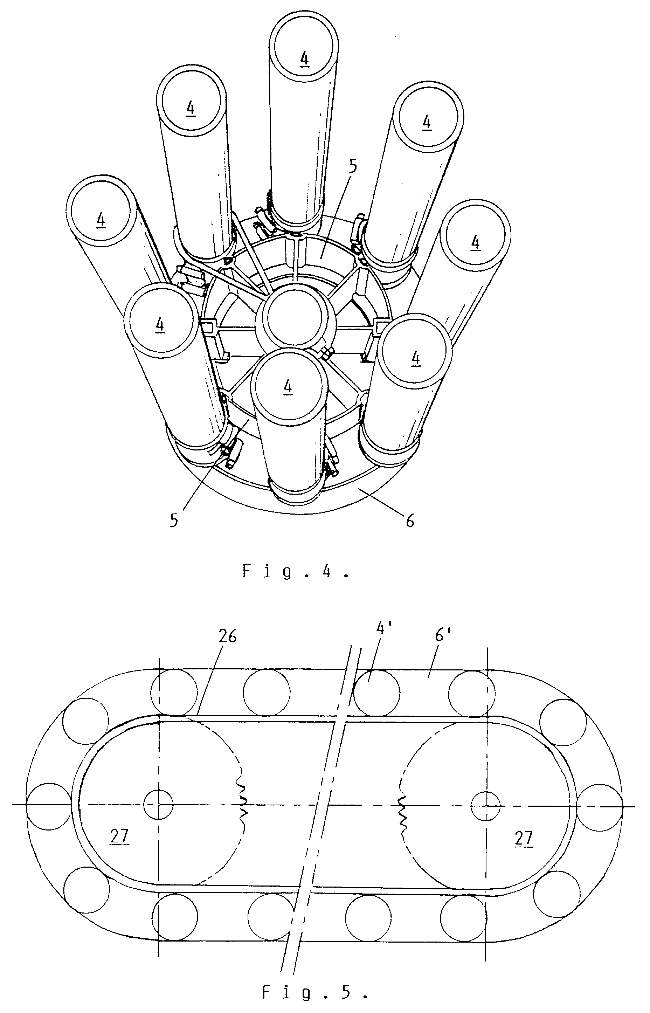

Since the movable component 5 is provided with eight pipes in the example described herein, it is also clear that the ratchet wheel 23 comprises eight teeth 23'. The shaft 24 of the ratchet and ratchet wheel mechanism 22 transmits its step-wise rotation through the intermediary of conical toothed wheels, not shown in the figures, to the movable component 5. The movable component 5 (Figure 4) is fixedly mounted with respect to the shaft 25 which is step-wisely rotated from the ratchet- and ratchet wheel mechanism 22.

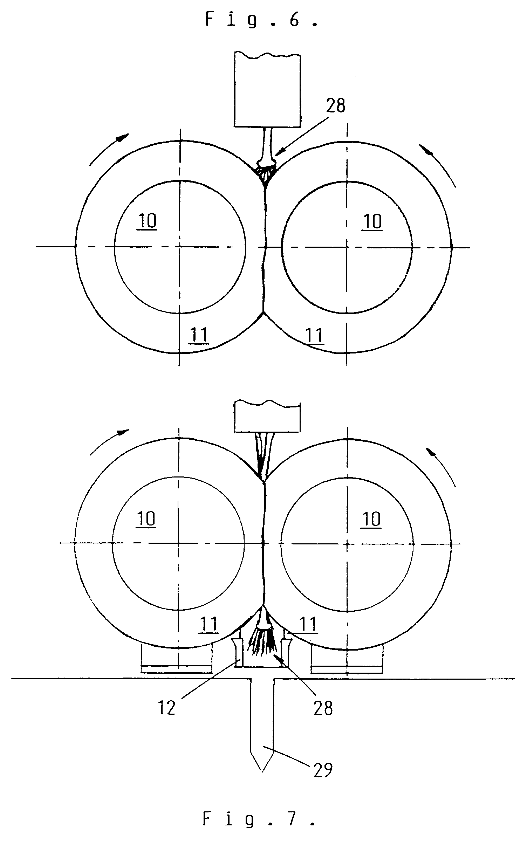

In a particular alternative, the fixed plate 6 with filling opening 7 can have the form which is schematically illustrated by Figure 5. The fixed plate, here 6', can show a random length so that a very large number of pipes 4' can be displaced by two chains 26 co-operating above each other and mounted on a set having each two toothed wheels 27. Such an arrangement enables a larger number of operators of the machine to be at work so as to keep the production rhythm at the desired level. This would i.a. be the case when the machine according to the invention and the device co-operating therewith for applying sprig holes had been pulled by a too fast driving puller.

Finally, it will be referred to Figures 6 to 9 illustrating very clearly the operation principle of the machine according to the invention.

The position according to Figure 6 is the one wherein a sprig 28 has come with its roots near the place where the slightly inflated strips 11 of the wheels 10 come into contact.

The position according to Figure 7 is the one wherein both wheels are further rotated and are always in contact so that the lower part of the sprig 28 is situated with its roots near said annular conduction element 12. The sprig hole is indicated in Figures 7 to 9 with reference 29.

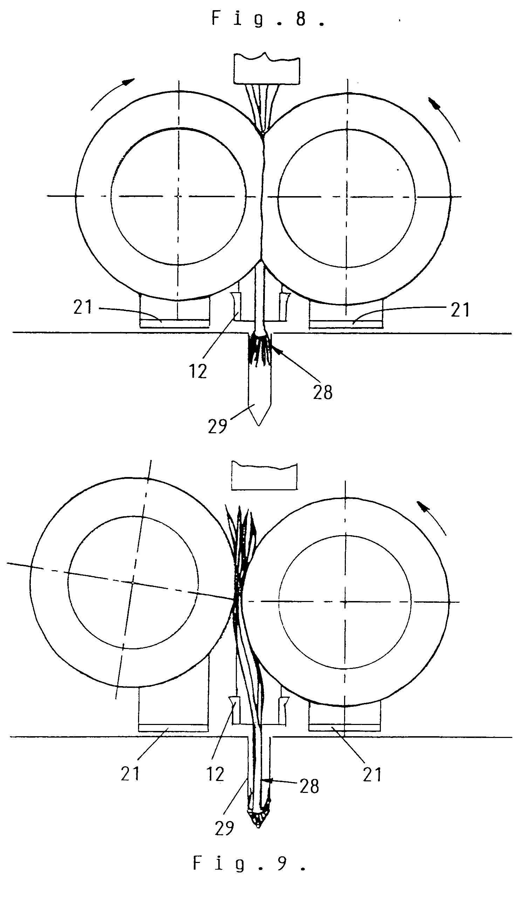

The position according to Figure 8 is the one wherein the sprig is now further pressed in the sprig hole 29 while the position according to Figure 9 finally corresponds to the step wherein the contact between the strips 11 of the wheels 10 is broken. The sprig is then placed at the correct depth in the sprig hole 29 or is supposed to fall further in this sprig hole. The rotation direction of both wheels is illustrated in the figures by arrows. In Figure 9, the contact between both wheels 10 is interrupted and the wheel, illustrated on the left side in this figure, does not run any more.

From the description given hereinabove of the machine according to the invention, it appears thus how with technically reliable means not only a correct sprig distance can be ensured synchronously with the just applied sprig holes, but the application of the sprig to the desired depth in the sprig holes is ensured.

The invention is not limited to the embodiment described hereinabove and modifications could be applied thereto, provided they fall within the scope of the claims annexed hereto.

## Claims

1. A machine for planting sprigs such as i.a. leek, coal, various arboriculture sprigs also in the form of "superseedlings", which is provided for being mounted on a device for forming plant holes in the ground having the necessary spacing, characterised in that said machine mainly consists of a step-wise movable component (5) provided with a number of vertical pipes (4), which component receives the sprigs and moves them to an outlet (8) through which the sprigs fall, under which outlet (8) two rotating means mutually co-operating in the same plane and operating as gripping and pushing means which are resiliently pulled towards one another and which are externally provided with flexible strips, between which the sprigs are gripped and moved downwards, one gripping and pushing means being driven continuously by means of a shaft onto which a pushing arm (14) is attached to move in said plane, at each rotation of said means, the other means which is provided with a camshaft (19) so that the contact between both means is interrupted and, along the other side an eccentric being mounted for driving a ratchet- and ratchet wheel mechanism (22) ensuring the step-wise movement of said movable component (5).

2. A machine according to claim 1, characterised in that said means working as gripping and pushing means move in a plane extending at right angles with respect to the driving direction of the machine.

3. A machine according to either one of the claims 1 - 2, characterised in that said movable component (5) is a step-wise rotating disc which is provided with a number of adjustable vertical pipes (4) provided for receiving the sprigs and which is rotated above a fixed plate (6) showing a filling opening (7) near said outlet (8).

4. A machine according to either one of the claims 1 and 2, characterised in that said movable component (5) consists of at least one but preferably two step-wise movable transporting chains (26) disposed above one another which are provided with a number of adjustable pipes (4') provided for receiving the sprigs and which is moved above a fixed plate (6') showing a filling opening near said outlet (8).

5. A machine according to any one of the claims 1 - 4, characterised in that said means forming rotating gripping and pushing means are wheels (10).

6. A machine according to any one of the claims 1 - 4, characterised in that said rotating gripping and pushing means are conveyors which are mutually in contact over a portion of their periphery.

7. A machine according to any one of the claims 1 - 6, characterised in that said flexible strips are air strips (11).

8. A machine according to any one of the claims 1 - 6, characterised in that said flexible strips are foam plastic or foam rubber strips.

9. A machine according to any one of the claims 1 - 8, characterised in that an annular conduction member (12) is provided underneath said rotating gripping and pushing means.

10. A machine according to claim 3, characterised in that said step-wise rotating movable component (5) is mounted with respect to a step-wise rotating shaft driven by said ratchet and ratchet wheel mechanism, with the possibility of pivoting with respect to this latter shaft.

11. A machine according to claim 4, characterised in that said transporting chain (26) is driven by a toothed wheel (27) which is mounted with respect to a step-wise rotating shaft driven by said ratchet and ratchet wheel mechanism, with the possibility of pivoting with respect to this latter shaft.

12. A machine according to any one of the claims 3 to 11, characterised in that said ratchet and ratchet wheel mechanism (22) ensuring the step-wise movement of said movable component (5) comprises a wheel (23) which is provided with pushing teeth (23') the number of which corresponds to the number of vertical pipes and means are provided for locking this wheel each time in the correct position of this wheel, so that a vertical pipe is always situated just above said filling opening in said fixed plate at the moment a sprig is moved towards said outlet.
